Europäisches Patentamt

European Patent Office

Office européen des brevets

(11) **EP 1 261 840 B1**

(12) **EUROPÄISCHE PATENTSCHRIFT**

(45) Veröffentlichungstag und Bekanntmachung des Hinweises auf die Patenterteilung:
**22.12.2004 Patentblatt 2004/52**

(21) Anmeldenummer: **01915213.1**

(22) Anmeldetag: **09.02.2001**

(51) Int Cl.$^7$: **G01B 11/06**, G01N 21/55

(86) Internationale Anmeldenummer:
**PCT/EP2001/001420**

(87) Internationale Veröffentlichungsnummer:
**WO 2001/059403 (16.08.2001 Gazette 2001/33)**

(54) **VERFAHREN ZUR QUANTITATIVEN UND/ODER QUALITATIVEN BESTIMMUNG VON SCHICHTDICKEN SOWIE EIN MIKROREAKTIONSGEFÄSS UND EINE TITERPLATTE**

METHOD FOR QUANTITATIVELY AND/OR QUALITATIVELY DETECTING LAYER THICKNESSES, A MIRCROREACTION VESSEL AND A TITRE PLATE

PROCEDE DE DETERMINATION QUANTITATIVE ET/OU QUALITATIVE D'EPAISSEURS DE COUCHE, CONTENANT POUR MICROREACTIONS ET PLAQUE DE TITRATION

(84) Benannte Vertragsstaaten:
**DE**

(30) Priorität: **11.02.2000 DE 10006083**

(43) Veröffentlichungstag der Anmeldung:
**04.12.2002 Patentblatt 2002/49**

(73) Patentinhaber: **INSTITUT FÜR MIKROTECHNIK MAINZ GmbH**
**55129 Mainz-Hechtsheim (DE)**

(72) Erfinder:
• **EHRFELD, Wolfgang**
**55124 Mainz (DE)**
• **WESTPHAL, Peter**
**55291 Saulheim (DE)**
• **LIMBURG, Bernd**
**55270 Essenheim (DE)**
• **BORNMANN, Antje**
**60529 Frankfurt (DE)**
• **BERGER, Svend**
**55128 Mainz (DE)**

(74) Vertreter: **Fuchs Mehler Weiss & Fritzsche Patentanwälte**
**Söhnleinstrasse 8**
**65201 Wiesbaden (DE)**

(56) Entgegenhaltungen:
EP-A- 0 286 195          WO-A-95/22754
WO-A-97/09618          WO-A-98/57149
DE-C- 19 814 811          US-A- 5 926 284

## Beschreibung

Die Erfindung betrifft ein Verfahren zur quantitativen und/oder qualitativen Bestimmung von Schichtdicken von Schichten aus biologischen oder chemischen Molekülen, die sich auf mindestens einer, mit einer Immobilisierungsschicht versehenen Metallschicht aufgrund von Interaktionen aus einem gasförmigen oder flüssigen Medium abscheiden, mittels ellipsometrischer Messungen, bei denen die ellipsometrischen Parameter Ψ und Δ ermittelt werden. Die Erfindung bezieht sich auch auf ein Mikroreaktionsgefäß gemäß dem Oberbegriff des Patentanspruchs 10 sowie auf eine Titerplatte gemäß dem Oberbegriff des Patentanspruchs 11.

Derartige Verfahren werden in der Medizintechnik, Biotechnik oder der pharmazeutischen Technik eingesetzt, um beispielsweise Antigen-Antikörperreaktionen nachzuweisen.

Unter einer Immobilisierungsschicht versteht man eine Beschichtung aus Atomen oder Molekülen, die selektiv andere Moleküle binden können. Unter Interaktionen werden Wechselwirkungen zwischen den auf der Immobilisierungsschicht verankerten Atomen oder Molekülen und den zu bindenden Molekülen verstanden. Hierbei kann es sich um biologische oder chemische Reaktionen handeln.

Biologische und chemische Interaktionen, die in flüssigkeitsgefüllten Küvetten unter Bildung dünner Schichten stattfinden, wurden bisher unter anderem durch die Markierung der beteiligten Substanzen durch z.B. fluoreszierende oder radioaktive Moleküle nachgewiesen. Dies wird beispielsweise in S.S. Deshpande, "Enzyme Immunoassays - From Concept to Product Development", Verlag Chapman & Hall, 1996 beschrieben. Dem Vorteil der relativ einfachen Durchführbarkeit steht eine Reihe von Nachteilen gegenüber. So müssen die relevanten Moleküle zunächst gelabelt bzw. in gelabelter Form zugekauft werden. Außer dieser zeitaufwendigen Vorbereitungen können durch die Markierung die biologischen oder chemischen Interaktionen beeinflußt werden, was wiederum die Meßergebnisse beeinträchtigt. Die beim Umgang mit radioaktivem Material auftretenden Probleme stellen weitere Nachteile dar.

Aus diesem Grund wurde zunehmend auf direkte Meßmethoden übergegangen, die ohne jegliche Markierung auskommen. Hierbei haben sich zwei Verfahren als geeignet herausgestellt.

Bei der Oberflächenplasmonenresonanzmessung wird in Metallschichten der Dicke von etwa 50 - 60 nm, insbesondere aus Gold oder Silber, die Resonanz der im Metall befindlichen freien Elektronen angeregt (s. E. Gedig, D. Trau und M. Orban, "Echtzeitanalyse biomolekularer Wechselwirkungen", Laborpraxis, Februar 1998, S. 26-28 und 30). Diese Anregung der freien Elektronen tritt nur dann auf, wenn parallel zur Einfallsebene polarisiertes Licht eingestrahlt wird. Für jede Messung muß entweder der Einfallswinkel oder die verwendete Lichtfrequenz durchgefahren werden, wodurch der apparative Aufwand relativ groß ist. Die reflektierte Intensität in Abhängigkeit von der Wellenlänge bei festem Winkel oder des Einfallswinkels bei fester Wellenlänge zeigt im Resonanzbereich ein Minimum.

Da die elektromagnetische Strahlung bei der Reflexion nicht auf den dünnen Metallfilm beschränkt bleibt, sondern über das sogenannte evaneszente Feld mit den ersten etwa 100 bis 300 nm des darüberliegenden Mediums wechselwirkt, wird der Resonanzwinkel bzw. die Resonanzwellenlänge stark vom Brechungsindex der unmittelbar über der Metallschicht liegenden Schicht beeinflußt. Verändern sich die Resonanzbedingungen, weil z.B. geringe Mengen Wasser durch biologische oder chemische Reaktionen unter Ausbildung einer zusätzlichen Schicht ersetzt werden, verschiebt sich das Minimum der reflektierten Intensität. Aus der Verschiebung läßt sich nur qualitativ das Aufwachsen der Schicht erkennen, nicht aber dessen absolute Dicke, weil dazu noch die Kenntnis des Brechungsindex der aufwachsenden Schicht bekannt sein müßte. Neben dem erheblichen apparativen Aufwand ist daher auch das Meßergebnis nicht allzu aussagefähig. Eine entsprechende Meßvorrichtung wird beispielsweise in der WO 90/05295 beschrieben.

In WO 98/57149 ist eine Antikörper - Immobilisierungsschnicht auf einer Metallschicht aufgebracht, in der durch Einstellung der Frequenz und/oder des Winkels Oberflächenplasmonenresonanz erzeugt wird. Die Schichtdiche einer Autigen-Schnicht wird aus Betrag und Phase des Reflexionssignals bestimmt.

Das zweite Verfahren ist die Ellipsometrie, wobei das Licht derart eingestrahlt wird, daß es ein gasförmiges oder flüssiges Umgebungsmedium durchläuft und anschließend auf die nachzuweisende biologische oder chemische Schicht auftrifft (s. H. Arwin, "Spectroscopic ellipsometry and biology: recent developments and challenges", Thin Solid Films 313-314, 1998, S. 764-774).

Bei ellipsometrischen Messungen werden die ellipsometrischen Parameter Ψ und Δ bestimmt, für die gilt:

$$r_p/r_s = (E_{rp}/E_{ep})/(E_{rs}/E_{es}) = \tan \Psi \cdot \exp (i\Delta)$$

$r_p$, $r_s$: komplexe Reflektivitäten

E: komplexe elektrische Feldamplitude

Indizes:

p: parallel zur Einfallsebene

s: senkrecht zur Einfallsebene
e: eingestrahlt
r: reflektiert

Ψ beinhaltet im wesentlichen die Intensitätsänderung durch Reflexion des Lichts. Δ beinhaltet im wesentlichen die Phasenverschiebung durch die Reflexion des Lichts, wobei dieser Parameter sehr empfindlich auf Schichtdicken reagiert.

In der EP 0 067 921 wird ein biologisches Testverfahren zur Bestimmung bioaktiver Substanzen mittels ellipsometrischer Messungen beschrieben. Ein dünnes dielektrisches Substrat wird mit einer Immobilisierungsschicht aus einer ersten biologisch aktiven Substanz beschichtet, die mit einer zweiten bioaktiven Substanz wechselwirkt. Mittels ellipsometrischer Messungen werden die optischen Veränderungen in der biologischen Schicht detektiert. Die Auswertung erfolgt dadurch, daß die ellipsometrischen Parameter zeitabhängig aufgetragen werden und diese Kurven mit Referenzkurven aus Messungen an biologischem Material bekannter Konzentrationen verglichen werden. Eine Einstrahlung durch die Rückseite des Substrates wurde zwar auch in Betracht gezogen, die Empfindlichkeit der Messung bei rückwärtiger Einstrahlung war jedoch 30x schlechter als bei vorderseitiger Einstrahlung. Daraus resultiert, daß dieses bekannte Verfahren den Nachteil hat, daß spezielle Küvetten verwendet werden müssen, und Titerplatten gar nicht eingesetzt werden können.

In Sensors and Actuators B 30 (1996), S. 77-80 wird zum Nachweis von DNA-Proben, die auf einer Metallschicht immobilisiert sind, vorgeschlagen, den Polarisationszustand des reflektierten Lichtes zu untersuchen. Als Referenz wird eine Metallschicht ohne DNA-Moleküle untersucht. Hierbei wird sowohl das P- als auch das S-polarisierte Licht eingestrahlt und die Phasenverschiebung zwischen den Proben und dem Referenzsignal ausgewertet. Anstatt die Winkelabhängigkeit der Intensität, wie bei bekannten Oberflächenplasmonen-Messungen, zu untersuchen, wird hier die Winkelabhängigkeit des Polarisationszustandes betrachtet. Bei einer praktischen Realisierung wäre auch hier aufgrund der durchzuführenden Änderungen des Einstrahlwinkels ein komplexer Aufbau notwendig.

Aufgabe der Erfindung ist es, ein Verfahren bereitzustellen, das schnell durchführbar ist, das bei rückwärtiger Messung eine deutlich größere Detektionsempfindlichkeit besitzt und das nicht nur zum qualitativen Nachweis von Schichten einsetzbar ist, sondern auch zur Messung der Dicke solcher Schichten. Es ist auch Aufgabe der Erfindung, Mikroreaktionsgefäße und Titerplatten zu schaffen, die für dieses Verfahren verwendet werden können.

Diese Aufgabe wird gelöst durch ein Verfahren zur quantitativen und/oder qualitativen Bestimmung von Schichtdicken von Schichten aus biologischen oder chemischen Molekülen, die sich auf mindestens einer, mit einer Immobilisierungsschicht versehenen Metallschicht aufgrund von Interaktionen aus einem gasförmigen oder flüssigen Medium abscheiden, mittels ellipsometrischer Messungen bei denen die ellipsometrischen Parameter Ψ und Δ ermittelt werden, wie diese im unabhängigen Anspruch 1 definiert sind, wobei

- der Einfallswinkel und/oder die Frequenz der für die ellipsometrischen Messungen verwendeten elektromagnetischen Strahlung derart eingestellt wird, daß in der Metallschicht eine Oberflächenplasmonenresonanz erzeugt wird,

- die Detektionsempfindlichkeit (δcosΔ)/(Dicke der zu bestimmenden Schicht) über die Dicke der Metallschicht eingestellt wird,

- die elektromagnetische Strahlung auf der der Immobilisierungsschicht abgewandten Seite der Metallschicht eingestrahlt wird und

- die mindestens eine ellipsometrische Messung während oder nach der Abscheidung durchgeführt wird und wenigstens der dazugehörige cosΔ zur Ermittlung der Dickenänderung der zu bestimmenden Schicht ausgewertet wird.

Es hat sich überraschend gezeigt, daß der ellipsometrische Parameter Δ durch die Oberflächenplasmonenanregung stark beeinflußt wird. Wenn die Wellenlänge und/oder der Einfallswinkel der verwendeten elektromagnetischen Strahlung bezüglich des verwendeten Metalls so eingestellt wird, daß eine Oberflächenplasmonenanregung auftritt, erhöht sich die Detektionsempfindlichkeit erheblich und liegt um eine Größenordnung über derjenigen, die bei der konventionellen Ellipsometrie, d.h. ohne Anregung der Oberflächenplasmonen, erreicht werden kann. Dadurch ist es möglich, deutlich geringere Schichtdickenänderungen zu detektieren bzw. das Aufwachsen durch biologische oder chemische Interaktionen bewirkter Schichten bereits zu einem früheren Zeitpunkt zu erkennen.

Während beim Stand der Technik die rückwärtige Einstrahlung ohne metallische Beschichtung schlechte ellipsometrische Meßergebnisse liefert, wird bei dem erfindungsgemäßen Verfahren dieser Nachteil nicht festgestellt. Dies ist darauf zurückzuführen, daß erfindungsgemäß eine signalverstärkende Metallschicht verwendet wird. Es wird dadurch möglich, z.B. herkömmliche Küvetten zu verwenden und die Messung an der Bodenwand der Küvette durchzuführen. Insbesondere bei der Verwendung von herkömmlichen Titerplatten mit nach oben offenen Mikroreaktionsgefäßen kann dadurch eine Vielzahl von Messungen in kurzer Zeit durchgeführt werden, was insbesondere beim High-Throughput-Screening von zunehmender Bedeutung ist.

Da die Ellipsometrie noch einen weiteren Parameter, nämlich tanΨ, liefert, ist es nicht notwendig, den Brechungsindex der aufwachsenden Schicht zu kennen, um die absolute Dicke dieser aufwachsenden Schicht bestimmen zu können. Mit dem erfindungsgemäßen Verfahren können somit mehr Informationen bei größerer Genauigkeit erhalten werden. Wenn die absolute Dicke der aufgewachsenen Schicht bestimmt werden soll, wird zusätzlich zum cosΔ noch der tanΨ ausgewertet.

Im Gegensatz zur konventionellen Ellipsometrie kann durch das erfindungsgemäße Verfahren die Signalhöhe und damit die Detektionsempfindlichkeit zusätzlich noch weiter vergrößert werden, wenn die Dicke der Metallschicht optimiert wird. Durch die Einstellung der Dicke der Metallschicht ist es möglich, die Steigung der cosΔ-Kurve zu vergrößern und das Verhältnis δcosΔ zur Schichtdicke anzuheben. Dadurch wird zwar der Dynamikbereich hinsichtlich der maximal meßbaren Schichtdicke möglicherweise eingeschränkt, da die gesamte cosΔ-Änderung grundsätzlich nicht größer als 2 sein kann, dies ist jedoch insofern kein Nachteil, weil bei Bedarf über die Wahl der Schichtdicke oder der Lichtwellenlänge die cosΔ-Änderung auch wieder reduziert werden kann.

Der Vorteil des erfindungsgemäßen Verfahrens besteht darin, daß nach der Einstellung der Parameter für die Oberflächenplasmonenanregung weder die Wellenlänge noch der Einfallswinkel variiert werden muß. Dies ist ein erheblicher Vorteil hinsichtlich des apparativen Aufwandes gegenüber Meßverfahren, bei denen einer dieser Parameter variiert werden muß. Mit dem Verfahren lassen sich mehr Proben pro Zeiteinheit untersuchen als dies bisher der Fall war, da auf das systematische Durchfahren des Einstrahlwinkels oder der Lichtwellenlänge verzichtet werden kann.

Vorzugsweise werden die ellipsometrischen Messungen während sowie vor und/oder nach der Abscheidung durchgeführt. Die Messungen vor der Abscheidung dienen als Referenzmessung, die mit der oder den Messungen während oder nach der Abscheidung verglichen werden. Aus der Änderung des cosΔ läßt sich eine Aussage über die Dicke der sich ausbildenden Schicht machen. Die Referenzmessungen können auch für unterschiedliche Proben verwendet werden.

Eine andere bevorzugte Ausführungsform sieht vor, daß kontinuierlich ellipsometrische Messungen mindestens während eines Zeitabschnitts der Abscheidung durchgeführt werden, und wenigstens die zeitliche Änderung der dazugehörigen cosΔ-Werte ausgewertet wird. Mit diesen Messungen läßt sich das Aufwachsen der nachzuweisenden Schicht verfolgen.

Vorzugsweise wird eine Metallschicht aus einem Metall oder einer Legierung verwendet, die im Wellenlängenbereich der verwendeten elektromagnetischen Strahlung einen Brechungsindex mit einem Realteil von <1 aufweist. Vorteilhafterweise wird eine Schicht aus Kupfer, Gold, Silber oder Aluminium oder eine Legierung verwendet, die diese Metalle enthält.

Während bei der Oberflächenplasmonenresonanzspektroskopie nach dem Stand der Technik Metallschichten um 50 nm und dicker verwendet werden (siehe z.B. in WO 08/57149), hat es sich herausgestellt, daß für das erfindungsgemäße Verfahren Dicken < 50 nm, insbesondere zwischen 10 und 45 nm, vorzugsweise zwischen 10 und 40 nm, weitaus besser geeignet sind. Bei Schichtdicken ≥ 50 nm wird die cosΔ-Kurve in Abhängigkeit von der eingestrahlten Lichtfrequenz deutlich flacher und der Dynamikbereich zwischen -1 und +1, der von der cosΔ-Kurve durchlaufen wird, nimmt deutlich ab. Bei Dicken der Metallschicht von < 10 nm ergeben sich jedoch zu geringe Sensitivitäten.

Es können auch zwei oder mehr Schichten aus Metall oder Legierungen verwendet werden, in denen die Anregung von Oberflächenplasmonen möglich ist. So kann eine Schicht aus einem Material hergestellt sein, das bei einem vorgegebenen Einfallswinkel die Oberflächenplasmonenresonanz in einem bestimmten vorgegebenen Wellenlängenbereich zeigt. Zur Abdeckung dieser Schicht kann ein anderes Metall oder eine andere Legierung verwendet werden. Beispielsweise kann für die erste Schicht Silber und für die zweite Schicht Gold verwendet werden, was den Vorteil hat, daß es im Vergleich zu Silber inert ist. Die Gesamtdicke beider Schichten sollte unter 50 nm liegen, wobei die Dicken der Einzelschichten beliebig gewählt werden können.

Es ist ferner auch möglich, die ellipsometrischen Messungen an ruhenden oder fließenden Medien durchzuführen.

Vorzugsweise wird als elektromagnetische Strahlung monochromatische Strahlung eingesetzt. Der Vorteil der monochromatischen Strahlung besteht darin, daß sie vor der Detektion nicht spektral gefiltert werden muß.

Hierfür können beispielsweise Laser eingesetzt werden. Es ist aber auch möglich, Lampen, wie z.B. Xenonlampen mit breiter Spektralverteilung als Strahlungsquelle zu verwenden, wobei dann vorteilhaft vor der Detektion eine spektrale Filterung durchzuführen ist.

Vorzugsweise wird elektromagnetische Strahlung im Wellenlängenbereich von 150 nm bis 20 μm, vorzugsweise von 300 nm bis 3 μm verwendet.

Das erfindungsgemäße Mikroreaktionsgefäß ist um unabhängigen Anspruch 10 definiert. Dort weist die Bodenwand im Inneren des Gefäßes eine für die Anregung von Oberflächenplasmonen geeignete Metallschicht auf, deren Diche zwischen 10 und 45 nm liegt.

Die erfindungsgemäße Titerplatte ist im unabhängigen Anspruch 11 definiert. Sie enthält mehrere Mikroreaktionsgefäße, wobei die Bodenwände der einzelnen Mikroreaktionsgefäße im Innern ebenfalls jeweils eine solche Metallschicht mit einer Diche zwischen 10 und 45 nm aufweisen.

Diese Metallbeschichtung besteht vorzugsweise aus einem Metall oder einer Legierung, das im Wellenlängenbereich der bei Messungen verwendeten elektromagnetischen Strahlung einen Brechungsindex mit einem Realteil von < 1 aufweist. Vorteilhafterweise werden die zuvor genannten Metalle und Legierungen verwendet. Die Dicke der Metallschicht liegt unter 50 nm, vorteilhafterweise im Bereich zwischen 10 und 45 nm, insbesondere zwischen 20 und 40 nm.

Um die Haftung der Metallschicht zu verbessern, kann zwischen der Metallschicht und der Bodenwand eine Haftvermittlungsschicht, beispielsweise aus Titan, angeordnet sein.

Vorzugsweise trägt die Metallschicht eine Immobilisierungsschicht.

An der Unterseite der Bodenwand ist vorzugsweise eine Struktur zur Einund/oder Auskopplung von elektromagnetischer Strahlung angeordnet. Diese Struktur dient dazu, daß das eingestrahlte Licht mit geringsten Verlusten und mit dem richtigen Einfallswinkel auf die Metallschicht und somit auf die nachzuweisende Schicht gelenkt wird. Als geeignete Struktur haben sich Prismen, und hier insbesondere die Trapezprismen, sowie Halbzylinder oder Halbkugeln herausgestellt.

Im Falle der Titerplatte ist es von Vorteil, wenn sich die Struktur über die Bodenwände von mindestens zwei Mikroreaktionsgefäßen der Titerplatte erstreckt. Die Herstellung der Titerplatten wird dadurch erheblich vereinfacht, insbesondere dann, wenn einer vollständigen Reihe von Mikroreaktionsgefäßen eine einzige Struktur zugeordnet ist.

Die Struktur kann beispielsweise aufgeklebt werden oder sie ist integraler Bestandteil der Bodenwand.

Um Intensitätsverluste zu minimieren, kann die Unterseite der Bodenwand auch eine Antireflexbeschichtung aufweisen.

Das Mikroreaktionsgefäß kann eine Küvette sein, insbesondere eine oben offene Küvette. Die Küvette kann auch eine Durchflußküvette sein.

Vorzugsweise ist die Bodenwand eben.

Beispielhafte Ausführungsformen der Erfindung werden nachfolgend anhand der Zeichnungen näher erläutert.

Es zeigen:

Fig. 1        einen Schnitt durch eine Küvette mit angeschlossenem Ellipsometer,

Fig. 2        eine Küvette gemäß einer weiteren Ausführungsform,

Fig. 3        eine perspektivische Darstellung einer Titerplatte,

Fig. 4        zwei Diagramme zur Erläuterung der Einstellung sowohl der Oberflächenplasmonenresonanz als auch der Dikken der Metallschicht,

Fig. 5        die Messung der Änderung des cos∆ in Abhängigkeit der Wellenlänge des eingestrahlten Lichtes,

Fig. 6        der cos∆ in Abhängigkeit der Meßzeit ohne Metallschicht und

Fign. 7 + 8    der cos∆ in Abhängigkeit der Meßzeit unter Verwendung von Silber- bzw. Goldschichten.

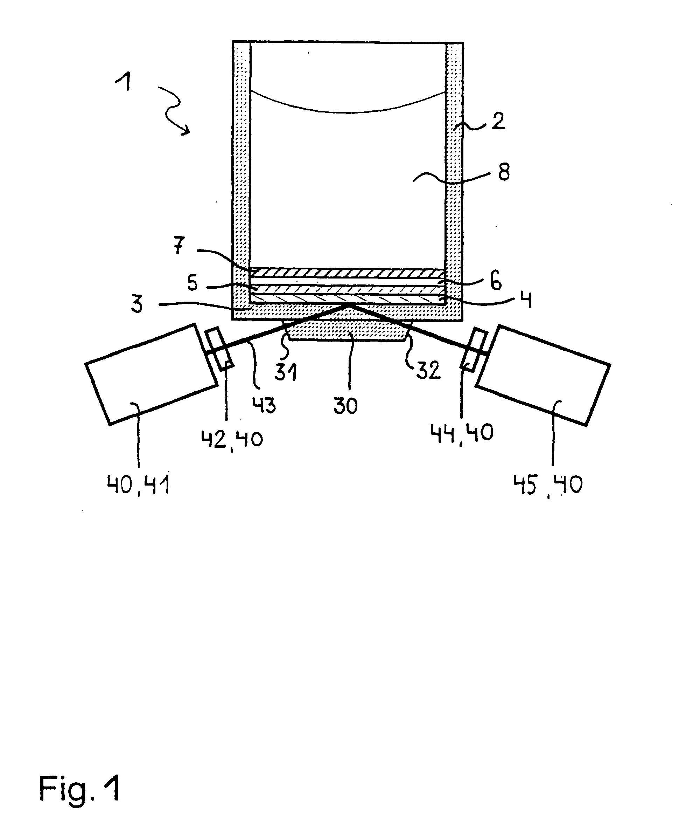

In der Fig. 1 ist ein Mikroreaktionsgefäß 1 in Form einer Küvette schematisch dargestellt. Die Seitenwände 2 können plan oder kreisförmig ausgebildet sein. Da das Ellipsometer an der Unterseite des Mikroreaktionsgefäßes 1 angeordnet ist und die elektromagnetische Strahlung durch die Bodenwand 3 eingestrahlt wird, spielt die Form und das Material der Seitenwände keine Rolle.

Die Bodenwand 3 ist in dem hier gezeigten Beispiel eben ausgebildet und trägt an der Unterseite ein trapezförmiges Prisma 30 mit den schrägen Eintritts- und Austrittsflächen 31 und 32. Das Prisma 30 ist über einen Immersionskleber an der Bodenwand 3 befestigt. Es ist auch möglich, das Prisma als integralen Bestandteil der Bodenwand 3 auszubilden.

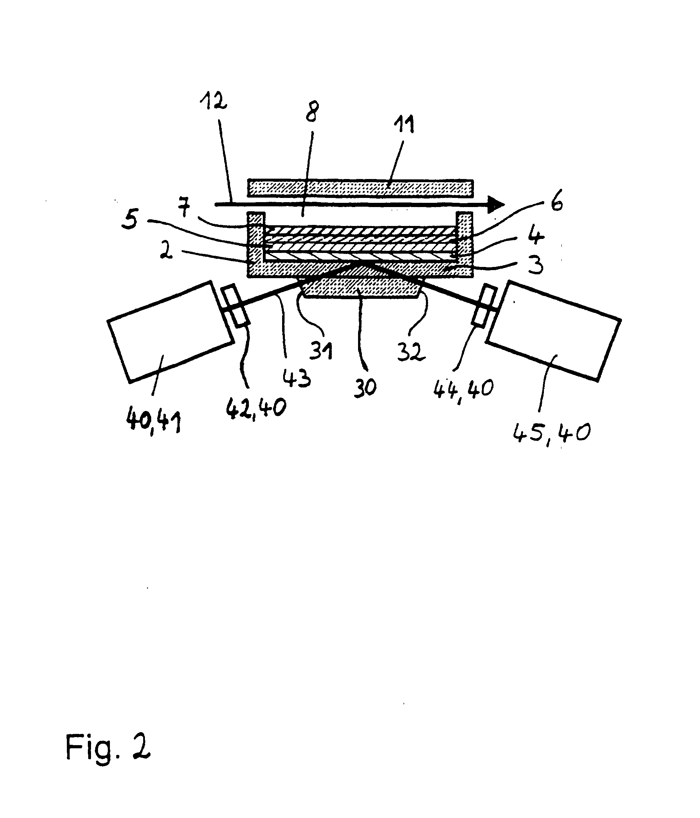

Das Ellipsometer 40 ist ein herkömmliches Ellipsometer und besitzt als Strahlungsquelle eine Lichtquelle 41, einen Polarisator 42, einen Analysator 44 und einen Detektor 45. Der Lichtstrahl 43 wird in dem hier gezeigten Beispiel unter einem Winkel von 70° eingestrahlt und trifft aufgrund des Trapezprismas 30 ohne Brechung auf die im Innern des Mikroreaktionsgefäßes auf der Oberseite der Bodenwand 3 angeordneten Schichten auf. Die Bodenwand 3 trägt eine Haftvermittlerschicht 4, auf der eine Metallschicht 5 angeordnet ist. Auf der Metallschicht 5 befindet sich die Immobilisierungsschicht 6, auf der die Schicht 7 aufwächst. Hierbei kann es sich beispielsweise um eine Schicht aus Antikörpern handeln, die in der Flüssigkeit 8 suspendiert sind. Die Schichtdicken sind in den Fign. 1 und 2 übertrieben dargestellt.

In der Fig. 2 ist eine weitere Ausführungsform dargestellt, die sich lediglich dadurch von der Fig. 1 unterscheidet, daß es sich um eine Durchflußküvette mit einer Deckplatte 11 handelt. Der Schichtaufbau und das Ellipsometer 40 sind identisch. Die Flußrichtung des Mediums wird durch den Pfeil 12 gekennzeichnet.

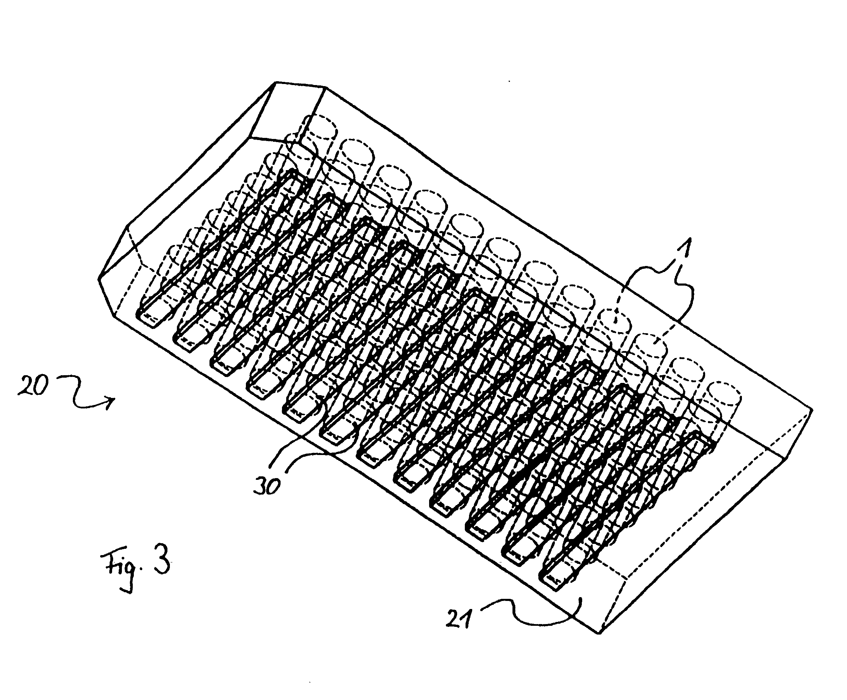

In der Fig. 3 ist die Draufsicht auf die Unterseite einer Titerplatte 20 dargestellt. Die einzelnen Mikroreaktionsgefäße 1 sind in Reihen in der Titerplatte 20 angeordnet. Es ist dadurch möglich, auf der Bodenplatte 21 jeweils für eine Reihe ein gemeinsames Trapezprisma 30 vorzusehen.

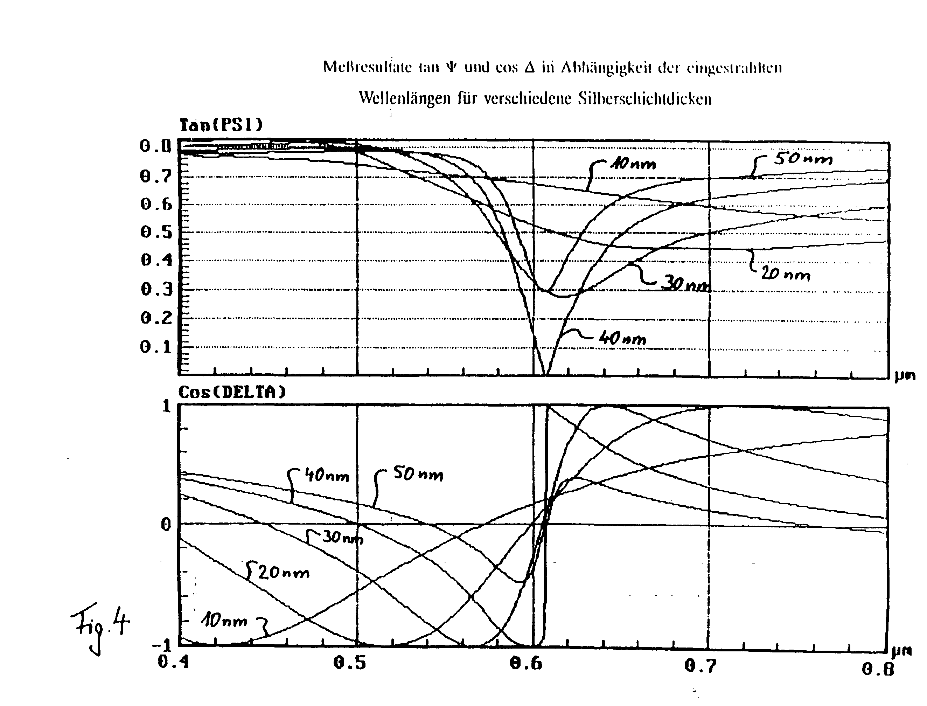

In der Fig. 4 ist im oberen Teil der tanΨ und im unteren Teil der cosΔ jeweils in Abhängigkeit von der eingestrahlten Wellenlänge dargestellt. Zur Einstellung der Oberflächenplasmonenresonanz wird das unpolarisierte Licht unter einem Einfallswinkel von beispielsweise 70° auf die Unterseite der Bodenwand einer Küvette gelenkt, wie sie beispielsweise in der Fig. 1 dargestellt ist. Durch die Anregung der Oberflächenplasmonenresonanz in der Metallschicht 5 stellt sich beim tanΨ bei einer bestimmten Wellenlänge ein ausgeprägtes Minimum ein, das mit einer steilen Flanke der entsprechenden cosΔ-Kurve einhergeht.

Nachdem auf diese Art und Weise die Wellenlänge für die Anregung der Oberflächenplasmonenresonanz ermittelt worden ist, erfolgt die weitere Optimierung über die Einstellung der Dicke der Metallschicht 5. Sowohl für tanΨ als auch für cosΔ sind 5 Kurven für die Dicken 10 nm, 20 nm, 30 nm, 40 nm und 50 nm aufgetragen. Die Kurven gelten für eine Metallschicht aus Silber; ähnliche Werte ergeben sich für eine Goldschicht. Es ist deutlich zu sehen, daß bei Schichtdicken von 10 nm und 50 nm die cosΔ-Kurven flach verlaufen und die Minima des tanΨ nicht so deutlich ausgeprägt sind. Dünnere Metallschichten eignen sich vorzugsweise zur Bestimmung biologischer Schichten größerer Dicke. Bei Schichtdicken der Metallschicht < 10 nm ergeben sich jedoch eher zu geringe Sensitivitäten. Schichtdicken der Metallschicht ≥ 50 nm eignen sich aufgrund des geringen Dynamikbereichs weniger für das erfindungsgemäße Verfahren. Lediglich die Kurven für die Dicken 20 bis 40 um zeigen einen steilen Anstieg und somit eine hohe Detektionsempfindlichkeit, wobei der gesamte Dynamikbereich zwischen -1 und + 1 ausgeschöpft wird.

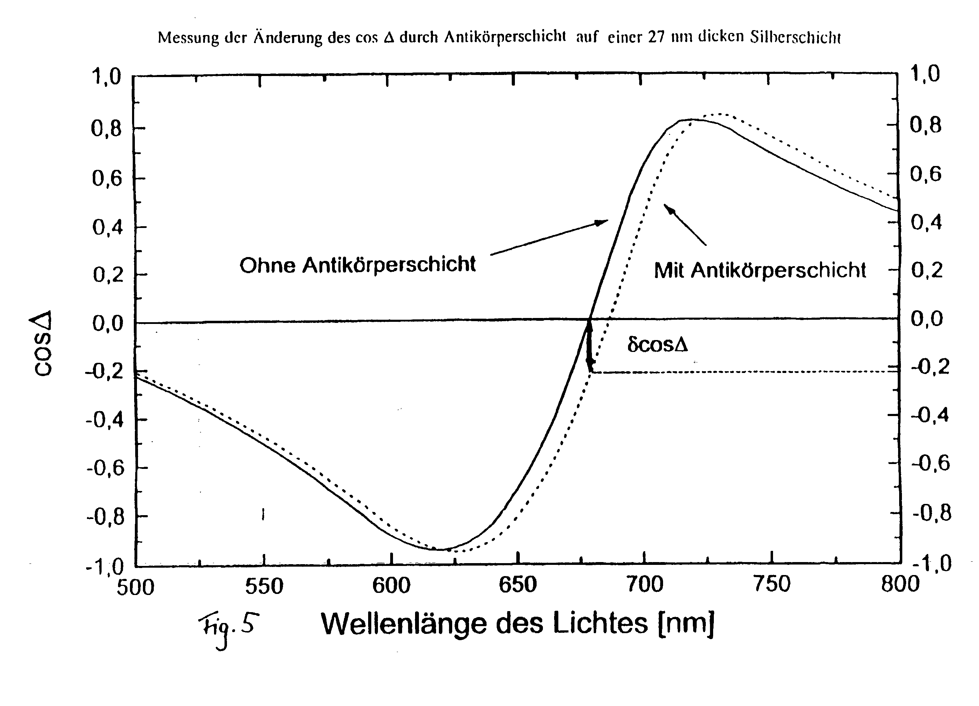

Nachdem die Optimierung der Wellenlänge, des Einfallswinkels und der Schichtdicke der Metallschicht eingestellt worden ist, wurden Messungen durchgeführt, die in den Fign. 5 bis 7 dargestellt sind.

In der Fig. 5 ist der cosΔ in Abhängigkeit der Wellenlänge des eingestrahlten Lichtes dargestellt, wobei die linke durchgezogene Kurve Messungen ohne Antikörper und die punktierte Kurve Messungen mit Antikörpern zeigen. Die Messungen wurden an Küvetten mit Böden aus Glas durchgeführt, deren Bodenwand mit einer 12 nm dicken Titanschicht, einer 27 nm dicken Silberschicht und einer 17 nm dicken Streptavidinschicht als Immobilisierungsschicht versehen ist. Der Einfallswinkel des Lichtes liegt bei 70°. Nach einer Interaktionszeit von 10 min wächst eine 2,5 nm dicke Antikörperschicht auf, die durch die Verschiebung der cosΔ-Kurve nachgewiesen wird. Die spektralen Messungen dienen dazu, die optimale Wellenlänge hinsichtlich der Detektionsempfindlichkeiten des Dynamikbereiches zu ermitteln. Im vorliegenden Fall ergab sich ein optimaler Wellenlängenbereich von 640 bis 700 nm. Führt man eine "singlewavelength"-Messung mit beispielsweise 780 nm durch, so läßt sich in Abhängigkeit von der Inkubationszeit der Antikörperlösung ein Antikörperschichtdickenzuwachs messen, der näherungsweise proportional zur Betragsänderung des cosΔ-Wertes ist. Nach einer Zunahme der Antikörperschicht um 2,5 nm hat sich der cosΔ-Wert um etwa 0,2 geändert. Die sich ergebende Detektionsempfindlichkeit ( |δcosΔ|/Schichtdicke) beträgt 0,08/nm. Diese Detektionsempfindlichkeit liegt um mehr als eine Größenordnung über derjenigen, die bei "konventioneller Ellipsometrie" (beispielsweise mit einem metallischen Substrat) erreichbar ist.

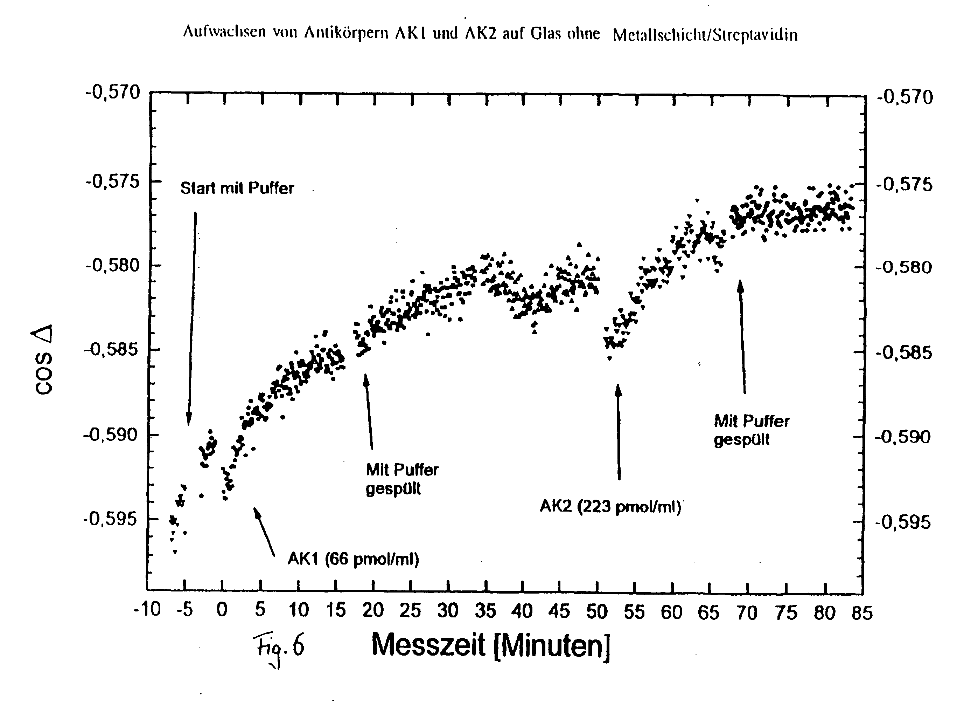

In der Fig. 6 ist der cosΔ in Abhängigkeit von der Meßzeit dargestellt. Es handelt sich hierbei um eine Vergleichsmessung, bei der auf der Bodenwand der Küvette die Metallschicht fehlte. Die Pfeile markieren die Zeitpunkte, an denen entweder mit einer wässrigen Pufferlösung oder mit Antikörper-haltigen wässrigen Lösungen in der Konzentration von 66 pmol/ml bzw. 223 pmol/ml (s. Fig. 6) gearbeitet wurde. Sobald die Antikörper zugesetzt wurden, steigt die cosΔ-Kurve in Abhängigkeit von der Meßzeit an. Der Anstieg ist jedoch kaum zu unterscheiden von cos Δ-Änderungen, die bei Abwesenheit von Antikörpern (nur Pufferlösung) aufgrund thermischer Driften auftreten.

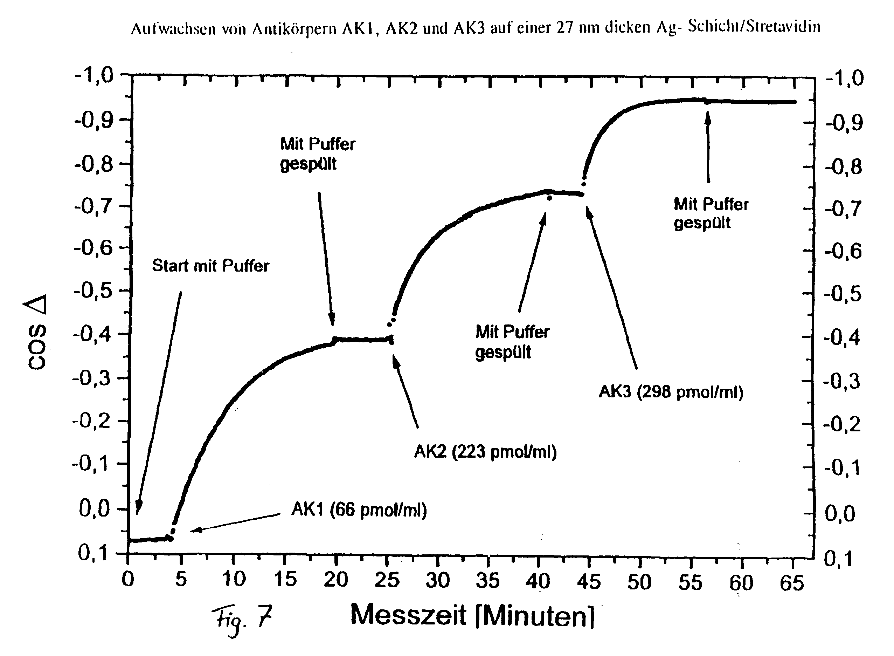

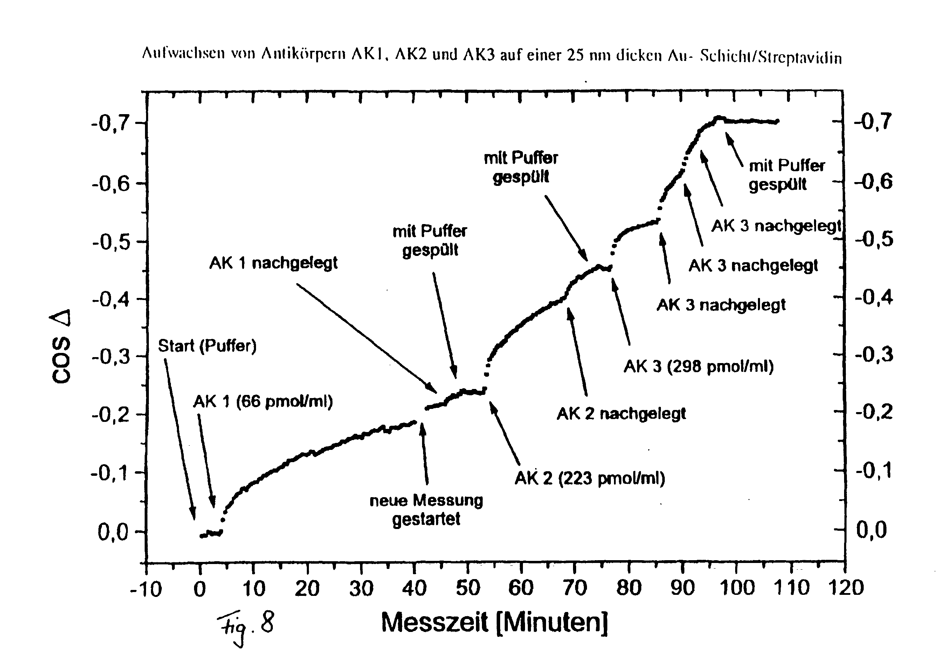

Die Streuung der Meßpunkte ist erheblich und es zeigt sich, daß durch die Verwendung einer Silber- bzw. einer Goldschicht auf der Innenseite der Bodenwand deutlich bessere Ergebnisse erzielt werden, wie dies in den Fign. 7 und 8 dargestellt ist. Der Wertebereich des cosΔ wird hierbei von 0,1 bis -1 durchlaufen, während der Wertebereich gemäß der Fig. 6 sich nur von -0,57 bis -0,595 erstreckt. Es wird deutlich, daß durch das Vorsehen der Metallschicht und die Einstellung der Oberflächenplasmonenresonanz deutlich größere Signalhöhen erzielt werden können und nicht nur eine Verbesserung des Signal-/Rauschverhältnisses, was einfach durch längere Meßzeiten zu erreichen ist.

**Bezugszeichen**

1 Mikroreaktionsgefäß
2 Seitenwand
3 Bodenwand
4 Haftvermittlungsschicht
5 Metallschicht
6 Immobilisierungsschicht
7 nachzuweisende Schicht aus angekoppelten Antikörpern
8 Flüssigkeit mit Antikörpern
10 Durchflußküvette
11 Deckplatte
12 strömende Flüssigkeit
20 Titerplatte
21 Bodenplatte
30 Prisma
31 Eintrittsfläche
32 Austrittsfläche
40 Ellipsometer
41 Lichtquelle
42 Polarisator
43 Lichtstrahl
44 Analysator
45 Detektor

**Patentansprüche**

1. Verfahren zur quantitativen und/oder qualitativen Bestimmung von Schichtdicken von Schichten aus biologischen oder chemischen Molekülen, die sich auf mindestens einer, mit einer Immobilisierungsschicht versehenen Metallschicht aufgrund von Interaktionen aus einem gasförmigen oder flüssigen Medium abscheiden, **gekennzeichnet durch** ellipsometrische Messungen, bei denen die ellipsometrischen Parameter Ψ und Δ ermittelt werden, für die gilt:

$$r_p/r_s = (E_{rp}/E_{ep})/(E_{rs}/E_{es}) = \tan \Psi \cdot \exp(i\Delta) = \tan \Psi (\cos\Delta + i \sin\Delta)$$

$r_p$, $r_s$: komplexe Reflektivitäten
E: komplexe elektrische Feldamplitude
Indizes:

p: parallel zur Einfallsebene
s: senkrecht zur Einfallsebene
e: eingestrahlt
r: reflektiert

wobei

- der Einfallswinkel und/oder die Frequenz der für die ellipsometrischen Messungen verwendeten elektromagnetischen Strahlung derart eingestellt wird, daß in der Metallschicht eine Oberflächenplasmonenresonanz erzeugt wird,

- die Detektionsempfindlichkeit $(\delta\cos\Delta)/$(Dicke der zu bestimmenden Schicht) über die Dicke der Metallschicht eingestellt wird,

- die elektromagnetische Strahlung auf der der Tmmobilisierungsschicht abgewandten Seite der Metallschicht eingestrahlt wird und

- mindestens eine ellipsometrische Messung während oder nach der Abscheidung durchgeführt wird und wenigstens der dazugehörige cosΔ zur Ermittlung der Dickenänderung der zu bestimmenden Schicht ausgewertet wird.

2. Verfahren nach Anspruch 1, **dadurch gekennzeichnet, daß** ellipsometrische Messungen während sowie vor und/ oder nach der Abscheidung durchgeführt werden.

3. Verfahren nach Anspruch 1, **dadurch gekennzeichnet, daß** kontinuierlich ellipsometrische Messungen mindestens während eines Zeitabschnitts der Abscheidung durchgeführt werden und wenigsten die zeitliche Änderung des dazugehörigen cosΔ ausgewertet wird.

4. Verfahren nach einem der Ansprüche 1 bis 3, **dadurch gekennzeichnet, daß** eine Metallschicht aus einem Metall oder einer Legierung verwendet wird, die im Wellenlängenbereich der verwendeten elektromagnetischen Strahlung einen Brechungsindex mit einem Realteil von < 1 aufweist.

5. Verfahren nach Anspruch 4, **dadurch gekennzeichnet, daß** eine Metallschicht aus Kupfer, Silber, Gold oder Aluminium oder aus einer Legierung verwendet wird, die wenigstens eines dieser Metalle enthält.

6. Verfahren nach einem der Ansprüche 1 bis 5, **dadurch gekennzeichnet, daß** die Dicke der Metallschicht zwischen 10 und 45 nm, insbesondere zwischen 20 und 40 nm, eingestellt wird.

7. Verfahren nach einem der Ansprüche 1 bis 6, **dadurch gekennzeichnet, daß** die ellipsometrischen Messungen am ruhenden oder fließenden Medium durchgeführt werden.

8. Verfahren nach einem der Ansprüche 1 bis 7, **dadurch gekennzeichnet, daß** als elektromagnetische Strahlung monochromatische Strahlung, vorzugsweise monochromatisches Licht, eingesetzt wird.

9. Verfahren nach einem der Ansprüche 1 bis 8, **dadurch gekennzeichnet, daß** elektromagnetische Strahlung im Wellenlängenbereich von 150 nm bis 20 μm, vorzugsweise von 300nm bis 3μm verwendet wird.

10. Mikroreaktionsgefäß mit einer Bodenwand aus für elektromagnetische Strahlungen in zumindest einem Teilbereich des Wellenlängenbereichs von 150 nm bis 20 μm durchlässigen Material, wobei die Bodenwand (3) im Innern des Gefäßes eine zur Anregung von Oberflächenplasmonen geeignete Metallschicht (5) aufweist, **dadurch gekennzeichnet, daß** die Metallschicht (5) eine Dicke zwischen 10 und 45 nm, insbesondere zwischen 20 und 40 nm, aufweist.

11. Titerplatte mit mehreren Mikroreaktionsgefäßen, die jeweils eine Bodenwand aus für elektromagnetische Strahlung in zumindest einem Teilbereich des Wellenlängenbereichs von 150 nm bis 20 μm durchlässigen Material aufweisen, **dadurch gekennzeichnet, daß** die Bodenwand (3) im Innern des Gefäßes eine zur Anregung von Oberflächenplasmonen geeignete Metallschicht (5) mit einer Dicke zwischen 10 und 45 nm, insbesondere zwischen 20 und 40 nm, aufweist.

12. Mikroreaktionsgefäß oder Titerplatte nach Anspruch 10 oder 11, **dadurch gekennzeichnet, daß** die Metallschicht (5) aus einem Metall oder einer Legierung besteht, die einen im Wellenlängenbereich der verwendeten elektromagnetischen Strahlung einen Brechungsindex mit einem Realteil von < 1 aufweist.

13. Mikroreaktionsgefäß oder Titerplatte nach Anspruch 12, **dadurch gekennzeichnet, daß** eine Metallschicht (5) aus Kupfer, Silber, Gold oder Aluminium oder aus einer Legierung verwendet wird, die wenigstens eines dieser Metalle enthält.

14. Mikroreaktionsgefäß oder Titerplatte nach einem der Ansprüche 10 bis 13, **dadurch gekennzeichnet, daß** zwischen der Metallschicht (5) und der Bodenwand (3) eine Haftvermittlungsschicht (4) angeordnet ist.

15. Mikroreaktionsgefäß oder Titerplatte nach einem der Ansprüche 10 bis 14, **dadurch gekennzeichnet, daß** die Metallschicht (5) eine Immobilisierungsschicht (6) trägt.

**16.** Mikroreaktionsgefäß oder Titerplatte nach einem der Ansprüche 10 bis 15, **dadurch gekennzeichnet, daß** die Unterseite der Bodenwand (3) eine Struktur zur Ein- und/oder Auskopplung von elektromagnetischer Strahlung trägt.

**17.** Mikroreaktionsgefäß oder Titerplatte nach Anspruch 16, **dadurch gekennzeichnet, daß** die Struktur ein Prisma (30), vorzugsweise ein Trapezprisma, ein Halbzylinder oder eine Halbkugel ist.

**18.** Titerplatte nach Anspruch 16 oder 17, **dadurch gekennzeichnet, daß** sich die Struktur über die Bodenwände (3) von mindestens zwei Mikroreaktionsgefäßen (1) der Titerplatte (20) erstreckt.

**19.** Mikroreaktionsgefäß oder Titerplatte nach einem der Ansprüche 10 bis 18, **dadurch gekennzeichnet, daß** die Unterseite der Bodenwand (3) eine Antireflexbeschichtung aufweist.

**20.** Mikroreaktionsgefäß nach einem der Ansprüche 10 oder 12 bis 17 oder 19, **dadurch gekennzeichnet, daß** das Mikroreaktionsgefäß (1) eine Küvette ist.

**21.** Mikroreaktionsgefäß nach Anspruch 20, **dadurch gekennzeichnet, daß** die Küvette eine nach oben offene Küvette ist.

**22.** Mikroreaktionsgefäß nach Anspruch 20, **dadurch gekennzeichnet, daß** die Küvette eine Durchflußküvette (10) ist.

**23.** Mikroreaktionsgefäß oder Titerplatte nach einem der Ansprüche 10 bis 22, **dadurch gekennzeichnet, daß** die Bodenwand (3) plan ist.

**Claims**

**1.** Method for the quantitative and/or qualitative determination of layer thicknesses of layers of biological or chemical molecules, which are deposited from a gaseous or liquid medium owing to interactions on at least one metal layer provided with an immobilization layer, **characterized by** ellipsometric measurements in which the ellipsometric parameters $\Psi$ and $\Delta$ for which the following applies are found:

$$r_p/r_s = (E_{rp}/E_{ep})/(E_{rs}/E_{es}) = \tan \Psi \cdot \exp(i\Delta) = \tan \Psi(\cos\Delta + i \sin\Delta)$$

$r_p$, $r_s$: complex reflectivities
E: complex electric field amplitude
Indices:

p: parallel to the incidence plane
s: perpendicular to the incidence plane
e: incident
r: reflected,

wherein

- the incidence angle and/or the frequency of the electromagnetic radiation used for the ellipsometric measurements is adjusted so that a surface plasmon resonance is generated in the metal layer,
- the detection sensitivity $(\delta\cos\Delta)/($thickness of the layer to be determined$)$ is adjusted via the thickness of the metal layer,
- the electromagnetic radiation is incident on the other side of the metal layer from the immobilization layer, and
- at least one ellipsometric measurement is carried out during or after the deposition, and at least the associated $\cos\Delta$ is evaluated in order to find the thickness change of the layer to be determined.

**2.** Method according to Claim 1, **characterized in that** ellipsometric measurements are carried out during and, before and/or after the deposition.

**3.** Method according to Claim 1, **characterized in that** continuously ellipsometric measurements are carried out at least during some of the deposition time, and at least the change of the associated cos∆ as a function of time is evaluated.

4. Method according to one of Claims 1 to 3, **characterized in that** a metal layer of a metal or alloy, which has a refractive index with a real part < 1 in the wavelength range of the electromagnetic radiation being used, is used.

5. Method according to Claim 4, **characterized in that** a metal layer of copper, silver, gold or aluminium, or an alloy which contains at least one of these metals, is used.

6. Method according to one of Claims 1 to 5, **characterized in that** the thickness of the metal layer is adjusted to between 10 and 45 nm, in particular between 20 and 40 nm.

7. Method according to one of Claims 1 to 6, **characterized in that** the ellipsometric measurements are carried out on the medium when it is stationary or flowing.

8. Method according to one of Claims 1 to 7, **characterized in that** monochromatic radiation, preferably monochromatic light, is used as the electromagnetic radiation.

9. Method according to one of Claims 1 to 8, **characterized in that** electromagnetic radiation in the wavelength range of from 150 nm to 20 $\mu$m, preferably from 300 nm to 3 $\mu$m, is used.

10. Microreaction vessel with a bottom wall which is transparent for electromagnetic radiation in at least one subrange of the wavelength range from 150 nm to 20 $\mu$m, the bottom wall (3) having a metal layer (5) suitable for the excitation of surface plasmons on the inside of the vessel, **characterized in that** the metal layer (5) has a thickness of between 10 and 45 nm, in particular between 20 and 40 nm.

11. Titre plate having a plurality of microreaction vessels, each of which has a bottom wall which is transparent for electromagnetic radiation in at least one subrange of the wavelength range from 150 nm to 20 $\mu$m, **characterized in that** the bottom wall (3) has a metal layer (5) with a thickness of between 10 and 45 nm, in particular between 20 and 40 nm, which is suitable for the excitation of surface plasmons on the inside of the vessel.

12. Microreaction vessel or titre plate according to Claim 10 or 11, **characterized in that** the metal layer (5) consists of a metal or alloy which has a refractive index with a real part < 1 in the wavelength range of the electromagnetic radiation being used.

13. Microreaction vessel or titre plate according to Claim 12, **characterized in that** a metal layer (5) of copper, silver, gold or aluminium, or an alloy which contains at least one of these metals, is used.

14. Microreaction vessel or titre plate according to one of Claims 10 to 13, **characterized in that** an adhesion promoting layer (4) is arranged between the metal layer (5) and the bottom wall (3).

15. Microreaction vessel or titre plate according to one of Claims 10 to 14, **characterized in that** there is an immobilization layer (6) on the metal layer (5).

16. Microreaction vessel or titre plate according to one of Claims 10 to 15, **characterized in that** there is a structure for the input and/or output of electromagnetic radiation on the lower side of the bottom wall (3).

17. Microreaction vessel or titre plate according to Claim 16, **characterized in that** the structure is a prism (30), preferably a trapezoidal prism, a semicylinder or a hemisphere.

18. Titre plate according to Claim 16 or 17, **characterized in that** the structure extends over the bottom walls (3) of at least two microreaction vessels (1) of the titre plate (20).

19. Microreaction vessel or titre plate according to one of Claims 10 to 18, **characterized in that** the lower side of the bottom wall (3) has an antireflection coating.

20. Microreaction vessel according to one of Claims 10 or 12 to 17 or 19, **characterized in that** the microreaction vessel (1) is a cuvette.

**21.** Microreaction vessel according to Claim 20, **characterized in that** the cuvette is an open-topped cuvette.

**22.** Microreaction vessel according to Claim 20, **characterized in that** the cuvette is a continuous flow cuvette (10).

**23.** Microreaction vessel or titre plate according to one of Claims 10 to 22, **characterized in that** the bottom wall (3) is planar.

**Revendications**

**1.** Procédé de détermination quantitative et/ou qualitative de l'épaisseur de couches de molécules biologiques ou chimiques qui, en raison d'interactions précipitent d'un fluide gazeux ou liquide sur au moins une couche métallique munie d'une couche d'immobilisation, **caractérisé par** des mesures ellipsométriques qui fournissent les paramètres ellipsométriques $\Psi$ et $\Delta$ pour lesquels on a :

$$r_p/r_s = (E_{rp}/E_{ep})/(E_{rs}/E_{es}) = \tan \Psi \cdot \exp(i\Delta) = \tan \Psi(\cos\Delta + i \sin\Delta)$$

avec :

$r_p$, $r_s$: réflectivités complexes
E: amplitude complexe du champ électrique
indices:

    p: parallèle au plan d'incidence
    s: perpendiculaire au plan d'incidence
    e: incident
    r: réfléchi,

et :

- l'angle d'incidence et/ou la fréquence du rayonnement électromagnétique utilisé pour les mesures ellipsométriques sont ajustés de façon à produire une résonance de plasmons de surface dans la couche métallique,
- la sensibilité de détection ($\delta\cos \Delta$)/(épaisseur de la couche à déterminer) est ajustée par l'intermédiaire de l'épaisseur de la couche métallique,
- le rayonnement électromagnétique est appliqué sur le côté de la couche métallique qui n'est pas tourné vers la couche d'immobilisation et
- au moins une mesure ellipsométrique est effectuée pendant ou après la précipitation et au moins le $\cos \Delta$ qui y est associé est estimé afin d'obtenir la variation de l'épaisseur de la couche à déterminer.

**2.** Procédé selon la revendication 1, **caractérisé en ce que** des mesures ellipsométriques sont effectuées pendant ainsi qu'avant et/ou après la précipitation.

**3.** Procédé selon la revendication 1, **caractérisé en ce que** des mesures ellipsométriques sont effectuées en continu au moins pendant une partie de la durée de la précipitation et **en ce qu'**au moins la variation temporelle du $\cos \Delta$ qui y est associé est estimée.

**4.** Procédé selon l'une des revendications 1 à 3, **caractérisé en ce que** l'on utilise une couche métallique en un métal ou en un alliage qui présente un indice de réfraction (avec une composante réelle) < 1 dans la plage des longueurs d'onde du rayonnement électromagnétique utilisé.

**5.** Procédé selon la revendication 4, **caractérisé en ce que** l'on utilise une couche métallique en cuivre, en argent, en or, en aluminium ou en un alliage qui contient au moins un de ces métaux.

**6.** Procédé selon l'une des revendications 1 à 5, **caractérisé en ce que** l'épaisseur de la couche métallique est ajustée entre 10 et 45 nm et en particulier entre 20 et 40 nm.

**7.** Procédé selon l'une des revendications 1 à 6, **caractérisé en ce que** les mesures ellipsométriques sont effectuées sur le fluide au repos ou en écoulement.

8.  Procédé selon l'une des revendications 1 à 7, **caractérisé en ce que** comme rayonnement électromagnétique, on utilise un rayonnement monochromatique et de préférence de la lumière monochromatique.

9.  Procédé selon l'une des revendications 1 à 8,
    **caractérisé en ce que** l'on utilise un rayonnement électromagnétique dont la longueur d'onde est comprise entre 150 nm et 20 μm et de préférence entre 300 nm et 3 μm.

10. Récipient de microréaction doté d'une paroi de fond en un matériau qui laisse passer les rayonnements électromagnétiques au moins dans une partie de la plage des longueurs d'onde comprises entre 150 nm et 20 μm, la paroi de fond (3) du récipient présentant une couche métallique (5) qui convient pour exciter les plasmons de surface, **caractérisé en ce que** la couche métallique (5) présente une épaisseur comprise entre 10 et 45 nm et en particulier entre 20 et 40 nm.

11. Plaque de titration dotée de plusieurs récipients de microréaction dont chacun présente une paroi de fond en un matériau qui laisse passer les rayonnements électromagnétiques au moins dans une partie de la plage des longueurs d'onde comprises entre 150 nm et 20 μm, **caractérisée en ce que** la paroi de fond (3) du récipient présente une couche métallique (5) qui convient pour exciter les plasmons de surface et dont l'épaisseur est comprise entre 10 et 45 nm et en particulier entre 20 et 40 nm.

12. Récipient de microréaction ou plaque de titration selon les revendications 10 ou 11, **caractérisés en ce que** la couche métallique (5) est constituée d'un métal ou d'un alliage qui présente un indice de réfraction (avec une partie réelle) < 1 dans la plage des longueurs d'onde du rayonnement électromagnétique utilisé.

13. Récipient de microréaction ou plaque de titration selon la revendication 12, **caractérisés en ce que** l'on utilise une couche métallique (5) en cuivre, en argent, en or, en aluminium ou en un alliage qui contient au moins un de ces métaux.

14. Récipient de microréaction ou plaque de titration selon l'une des revendications 10 à 13, **caractérisés en ce qu'**une couche adhésive (4) est agencée entre la couche métallique (5) et la paroi de fond (3).

15. Récipient de microréaction ou plaque de titration selon l'une des revendications 10 à 14, **caractérisés en ce que** la couche métallique (5) porte une couche d'immobilisation (6).

16. Récipient de microréaction ou plaque de titration selon l'une des revendications 10 à 15, **caractérisés en ce que** le côté inférieur de la paroi de fond (3) porte une structure destinée au couplage et/ou au découplage de rayonnement électromagnétique.

17. Récipient de microréaction ou plaque de titration selon la revendication 16, **caractérisés en ce que** la structure est un prisme (30), de préférence un prisme trapézoïdal, un demi-cylindre ou une demi-sphère.

18. Plaque de titration selon les revendications 16 ou 17, **caractérisée en ce que** la structure s'étend sur les parois de fond (3) d'au moins deux récipients de microréaction (1) de la plaque de titration (20).

19. Récipient de microréaction ou plaque de titration selon l'une des revendications 10 à 18, **caractérisés en ce que** le côté inférieur de la paroi de fond (3) présente un revêtement antireflet.

20. Récipient de microréaction selon l'une des revendications 10 ou 12 à 17 ou 19, **caractérisé en ce que** le récipient de microréaction (1) est une cuvette.

21. Récipient de microréaction selon la revendication 20, **caractérisé en ce que** la cuvette est une cuvette ouverte vers le haut.

22. Récipient de microréaction selon la revendication 20, **caractérisé en ce que** la cuvette est une cuvette (10) traversée par un écoulement.

23. Récipient de microréaction ou plaque de titration selon l'une des revendications 10 à 22, **caractérisés en ce que** la paroi de fond (3) est plane.

Fig. 1

Fig. 2

Fig. 3

Meßresultate tan Ψ und cos Δ in Abhängigkeit der eingestrahlten

Wellenlängen für verschiedene Silberschichtdicken

Fig. 4

Messung der Änderung des cos Δ durch Antikörperschicht auf einer 27 nm dicken Silberschicht

Fig. 5   Wellenlänge des Lichtes [nm]

cosΔ

Ohne Antikörperschicht

Mit Antikörperschicht

δcosΔ

EP 1 261 840 B1

Aufwachsen von Antikörpern AK1 und AK2 auf Glas ohne Metallschicht/Streptavidin

Fig. 6   Messzeit [Minuten]

EP 1 261 840 B1

Aufwachsen von Antikörpern AK1, AK2 und AK3 auf einer 27 nm dicken Ag- Schicht/Stretavidin

Fig. 7 Messzeit [Minuten]

EP 1 261 840 B1

Fig. 8